(19) Europäisches Patentamt

European Patent Office

Office européen des brevets

(11) **EP 3 264 669 B1**

(12) # EUROPEAN PATENT SPECIFICATION

(45) Date of publication and mention
of the grant of the patent:
**25.11.2020 Bulletin 2020/48**

(51) Int Cl.:
***H04L 9/00*** *(2006.01)*

(21) Application number: **16177299.1**

(22) Date of filing: **30.06.2016**

(54) **SYSTEM AND METHOD FOR SEARCHING OVER ENCRYPTED DATA USING HOMOMORPHIC ENCRYPTION**

SYSTEM UND VERFAHREN ZUR SUCHE ÜBER VERSCHLÜSSELTEN DATEN MITHILFE HOMOMORPHER VERSCHLÜSSELUNG

SYSTÈME ET PROCÉDÉ DE RECHERCHE DANS DES DONNÉES CHIFFRÉES À L'AIDE D'UN CHIFFREMENT HOMOMORPHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2018 Bulletin 2018/01**

(73) Proprietor: **Huawei Technologies Co., Ltd.**
**Longgang District**
**Shenzhen, Guangdong 518129 (CN)**

(72) Inventors:
  • **GROHMANN, Bjoern**
    **80992 Munich (DE)**
  • **SCHAAD, Andreas**
    **80992 Munich (DE)**

(74) Representative: **Körber, Martin Hans**
**Mitscherlich PartmbB**
**Patent- und Rechtsanwälte**
**Postfach 33 06 09**
**80066 München (DE)**

(56) References cited:
  • **JIADI YU ET AL: "Toward Secure Multikeyword Top-k Retrieval over Encrypted Cloud Data", IEEE TRANSACTIONS ON DEPENDABLE AND SECURE COMPUTING, vol. 10, no. 4, 1 July 2013 (2013-07-01), pages 239-250, XP055330682, US ISSN: 1545-5971, DOI: 10.1109/TDSC.2013.9**
  • **CHRISTOPH BÖSCH ET AL: "Selective Document Retrieval from Encrypted Database", 19 September 2012 (2012-09-19), INFORMATION SECURITY, SPRINGER BERLIN HEIDELBERG, BERLIN, HEIDELBERG, PAGE(S) 224 - 241, XP047016694, ISBN: 978-3-642-33382-8 * section 3 ***
  • **RAJPREET KAUR ET AL: "Secure and Efficient Search Over Cloud: A Comparative Study of various Searching Techniques", INTERNATIONAL JOURNAL OF EMERGING TECHNOLOGIES IN ENGINEERING RESEARCH, vol. 1, no. 1, 1 July 2015 (2015-07-01), XP055330828, ISSN: 2454-6410**

**Description**

BACKGROUND

The present invention, relates to cryptography and, more specifically, to systems and apparatus for searching over encrypted data by combining encrypted datasets.

Homomorphic encryption mechanisms provide a range of operations that may be performed on encrypted data. The homomorphic encryption mechanisms behave homomorphically in a mathematical sense. For example, an addition operation performed on a first encrypted dataset and on a second encrypted dataset creates an encrypted third dataset that is mathematically similar to an encryption of an addition operation performed on the first and second datasets (i.e., the addition is performed first, and the encryption is performed on the result), mathematically represented as: $E(a+b) = E(a) + E(b)$, where E denotes the homomorphic encryption mechanism, $a$ denotes the first dataset, and b denotes the second dataset.

In practice, such homomorphic encryption mechanisms are computationally intensive, requiring long computation times and/or significant computation resources (e.g., memory, processor(s)), making real-time applications, such as searches over large encrypted data, impractical and/or not efficient.

JIADI YU ET AL: "Toward Secure Multikeyword Top-k Retrieval over Encrypted Cloud Data", IEEE TRANSACTIONS ON DEPENDABLE AND SECURE COMPUTING, vol. 10, no. 4, discloses a two-round searchable encryption (TRSE) scheme that supports top-k multikeyword retrieval.

CHRISTOPH BOSCH ET AL: "Selective Document Retrieval from Encrypted Database" discloses a Selective Document Retrieval scheme which allows a client to store encrypted data on a third-party server and perform search remotely.'

RAJPREET KAUR ET AL: "Secure and Efficient Search Over Cloud: A Comparative Study of various Searching Techniques", INTERNATIONAL JOURNAL OF EMERGING TECHNOLOGIES IN ENGINEERING RESEARCH, vol. 1, no. 1 describes various search techniques and illustrates some problems related to privacy and efficient retrieval.

SUMMARY

It is an object of the present invention to provide an apparatus, a system, a computer program product, and a method for searching over encrypted data.

The foregoing and other objects are achieved by the features of the independent claims. Further implementation forms are apparent from the dependent claims, the description and the figures.

According to a first aspect, an apparatus for searching over an encrypted dataset, wherein the apparatus is configured to: receive a first dataset arranged in a data structure having a first dimension; receive a second dataset having a second dimension, the second dimension being equal to first dimension; generate a symmetrical encryption key according to the first dimension; encrypt the first dataset using the symmetrical encryption key; encrypt the second dataset using the symmetrical encryption key; transmit the encrypted first dataset and the encrypted second dataset to a server for storage; receive from the server an encrypted third dataset; decrypt the encrypted third dataset using the symmetrical encryption key; and output the decrypted third dataset; wherein the encrypted third dataset is a combination of the encrypted first dataset and the encrypted second dataset, wherein combination is performed while the first dataset and the second dataset are in the encrypted state.

The encrypted third dataset is created as a combination of the encrypted first dataset and the encrypted second dataset based on an encryption mechanism designed to improve performance of a computing unit executing the combination operation, for example, in terms of reduced computation time and/or reduced processing resources for performing the combination operation. The improvement in performance provided by the encryption mechanism designed for optimization of performing the combination operation on encrypted data is greater, for example, in comparison to encryption methods that provide a greater number of functions over encrypted data, for example, homomorphic encryption mechanisms designed for general purpose applications. The encryption mechanism designed to optimize the combination function on encrypted data scales well, providing improvement in performance for large first and/or second datasets, for example, in comparison to general purpose homomorphic mechanisms that do not scale well and/or do not provide computation efficiency for large datasets. The encryption mechanism designed to combine encrypted datasets (as described herein) provides the optimal tradeoff between security, functionality, and fast computation time, which may be used, for example, to provide users with fast search times over large encrypted datasets, and/or in other applications, for example, in a secure network traffic management application, for instance, to find a certain network address in an encrypted address register.

In a first possible implementation of the apparatus according to the first aspect, the data structure of the first dataset and the second data set comprise a vector and the combination of the first and second encrypted data sets includes a vector inner product.

The encryption mechanism designed to calculate the vector inner product on encrypted data, optionally only the vector inner product on encrypted data, provides improved performance over other homomorphic encryption mechanisms designed to provide greater number of functions over encrypted data, such as general purpose homomorphic mechanisms. The encryption mechanism is designed to provide improved performance for calculation of the vector inner product for large datasets, for example, allowing fast searches over large encrypted datasets.

In a second possible implementation form of the apparatus according to the first aspect as such or according to any of the preceding implementation forms of the first aspect, the data structure of the first dataset represents a relation between documents and keywords, wherein the second dataset represents a query comprising at least one keyword for searching over the first dataset to identify at least one document that includes the keyword, wherein the dimension represents the number of keywords, wherein the third dataset represents the at least one document that includes the at least one keyword.

In a third possible implementation form of the apparatus according to the first aspect as such or according to any of the preceding implementation forms of the first aspect, the apparatus is further configured to: generate a parameter vector based on a security parameter and the dimension and, wherein the symmetrical encryption key is generated based on the parameter vector.

In a fourth possible implementation form of the apparatus according to the third form, the first dataset and the second dataset are encrypted using the parameter vector and the symmetrical encryption key.

In a fifth possible implementation form of the apparatus according to the fourth form, the first dataset is encrypted using a first parameter of the parameter vector, and the second dataset is encrypted using a second parameter of the parameter vector.

In a sixth possible implementation form of the apparatus according to the fifth form, encrypting the second dataset comprises creating a query key associated with the encrypted second dataset, wherein decrypting the encrypted third dataset is performed using the symmetrical encryption key and the query key.

In a seventh possible implementation form of the apparatus according to the first aspect as such or according to any of the preceding implementation forms of the first aspect, the symmetrical encryption key includes a first encryption position vector for encryption of the first dataset and a second encryption position vector for encryption of the second dataset, wherein the first encryption position vector and the second encryption position vector respectively define an order of elements of the first encrypted dataset and the second encrypted dataset, wherein a permutation to another order of the elements of the first encrypted dataset and the second encrypted dataset is detectable using the respective first encryption position vector and the second encryption position vector.

The position vector(s) pin the encrypted datasets to certain positions, which provides additional security by providing the ability to detect the permutation to another order of the elements, which may be indicative of tampering.

In an eighth possible implementation form of the apparatus according to the first aspect as such or according to any of the preceding implementation forms of the first aspect, the encryption of at least one of elements of the first dataset and elements of the second dataset is based on computing a first value modulo a second value masked with a non-deterministic third value, wherein the non-deterministic third value and the second value are maintained in a secret state.

The encryption mechanism hides the modulus o the underlying arithmetic domain, which improves security by hardening the system against lattice based attacks.

In a ninth possible implementation form of the apparatus according to the first aspect as such or according to any of the preceding implementation forms of the first aspect, the first dataset is encrypted using the symmetrical encryption key based on the relationship:

$$c_i \equiv \alpha \left( a_i \sigma + p_i + A \varrho_i \right) \bmod t_i \mu,$$

wherein:

$c_i$ denotes an element of the encrypted first dataset;
$\alpha$, $\sigma$, and $\mu$ are members of the symmetrical encryption key;
$\varrho_i$ denotes an elements of an encryption position vector defining an order of elements of the first encrypted dataset, the encryption position vector being a member of the symmetrical encryption key;
$p_i$ denotes an elements of the data structure of the first dataset in an unencrypted state; and
$A$, $a_i$, and $ti$ are non-deterministic values.

In a tenth possible implementation form of the apparatus according to the first aspect as such or according to any of the preceding implementation forms of the first aspect, the encryption further comprises adding an encrypted random initialization vector (IV) according to the relationship:

$$c_{n+1} \equiv \alpha \left( a_{n+1}\sigma + A \right) \bmod t_{n+1}\mu$$

wherein:

$c_{n+1}$ denotes an element of the encrypted first dataset;
$\alpha$, $\sigma$, and $\mu$ are members of the symmetrical encryption key; and
$A$, $a_{n+1}$, and $t_{n+1}$ are non-deterministic values;

In an eleventh possible implementation form of the apparatus according to the first aspect as such or according to any of the preceding implementation forms of the first aspect, the second dataset is encrypted using the symmetrical encryption key based on the relationship:

$$q_i \equiv \gamma \left( b_i\sigma + d_i + V\kappa_i \right) \bmod s_i\mu$$

wherein:

$q_i$ denotes an element of the encrypted second dataset;
$\sigma$, and $\mu$ are members of the symmetrical encryption key;
$\kappa_i$ denotes an element of an encryption position vector defining an order of elements of the second encrypted dataset, the encryption position vector being a member of the symmetrical encryption key;
$\gamma$ and $V$ are members of a query key used in the process of decrypting the third encrypted dataset;
$d_i$ denotes an elements of the vector of the second dataset in an unencrypted state; and
$b_i$, and $s_i$ are non-deterministic values.

In a twelfth possible implementation form of the apparatus according to the first aspect as such or according to any of the preceding implementation forms of the first aspect, the server is further configured to calculate a result vector used for decryption of the third dataset, wherein the result vector is calculated based on the inner produce of the encrypted first dataset by the encrypted second dataset, represented by the relationship:

$$\mathbf{z} = (z_0, z_1)$$

$$z_0 = \sum_{i=0}^{n} c_i q_i \quad \text{and} \quad z_1 = c_{n+1}.$$

wherein:

$z$ denotes the result vector;
$c_i$ denotes an element of the encrypted first dataset;
$q_i$ denotes an element of the encrypted second dataset;

In a thirteenth possible implementation form of the apparatus according to the twelfth form, the decryption of the encrypted third dataset is based on the relationship:

$$m' \equiv \tau \left( z_0 - z_1 \sum_{i=0}^{n} \varrho_i q_i \right) \bmod \mu,$$

$$m \equiv m' - VK \bmod \sigma.$$

wherein:

m denotes the decrypted values of the third dataset;

*K* is a member of the symmetric encryption key; and

m' denotes an intermediate value calculated during the decryption process.

In a fourteenth possible implementation form of the apparatus according to the first aspect as such or according to any of the preceding implementation forms of the first aspect, the apparatus comprises a client terminal in network communication with the server, wherein the server is configured to calculate the combination of the encrypted first dataset and the encrypted second dataset.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a flowchart of a method for searching and/or querying encrypted data stored in a database by computing a combination of an encrypted first dataset and an encrypted dataset that were encrypted using a symmetrical encryption key created according to a first dimension of the first and second datasets, in accordance with some embodiments of the present invention;

FIG. 2 is a block diagram of components of a system that searches over and/or applies a query to encrypted data instances by computing the combination of the encrypted first and second datasets, in accordance with some embodiments of the present invention;

FIG. 3 is a graph conceptually depicting the technical improvement in computing performance achievable by the systems and/or methods described herein, in accordance with some embodiments of the present invention;

FIG. 4 is another flowchart of an exemplary method of encrypting a first and second datasets using an encryption method designed to allow combination of the first and second datasets in the encrypted state, in accordance with some embodiments of the present invention;

FIG. 5 is a block diagram of an exemplary architecture for encrypting a first and second dataset using an encryption mechanism designed to optimally combine the first and second datasets in the encrypted state, in accordance with some embodiments of the present invention;

FIG. 6 is an exemplary dataflow diagram for encrypting a first and second dataset using an encryption mechanism designed to optimally combine the first and second datasets in the encrypted state, in accordance with some embodiments of the present invention; and

FIG. 7 is an exemplary dataflow diagram for encrypting a first and second dataset using an encryption mechanism designed to optimally combine the first and second datasets in the encrypted state, in accordance with some embodiments of the present invention.

DETAILED DESCRIPTION

The present invention, relates to cryptography and, more specifically, to systems and apparatus for searching over encrypted data by combining encrypted datasets.

An aspect of some embodiments of the present invention relates to systems and apparatus that combine an encrypted first dataset with an encrypted second dataset to create an encrypted third dataset, the combination being performed while the first and second dataset are in the encrypted state to generate a result that is mathematically similar to first combining the first and second datasets in the unencrypted state and then encrypting the result. Optionally, the operation is a vector inner product. The operation may be performed as a process for searching over encrypted data, for example, applying an encrypted query (i.e., second dataset), for example, keywords (optionally with Boolean literal(s)), to an encrypted index (i.e., first dataset) of encrypted data instances, for example, documents, stored in a database to identify one or more data instances meeting the query (i.e., third dataset).

The first dataset is arranged in a data structure having a first dimension, for example, a matrix (or vector) having a certain number of columns. The second dataset has a second dimension equal to the first dimension, for example, a vector (or another matrix) having a number of rows equal to the number of columns of the matrix of the first dataset. A symmetrical encryption key is generated according to the first dimension. The first and second datasets are encrypted using the generated key. A third encrypted dataset, optionally a vector, is created by combining the encrypted first and second datasets, optionally by performing a vector inner product.

The encrypted third dataset is created as a combination of the encrypted first dataset and the encrypted second dataset based on an encryption mechanism designed to improve performance of a computing unit executing the combination operation, for example, in terms of reduced computation time and/or reduced processing resources for performing the combination operation. The improvement in performance provided by the encryption mechanism designed for optimization of performing the combination operation on encrypted data is greater, for example, in comparison to encryption methods that provide a greater number of functions over encrypted data, for example, homomorphic encryption mechanisms designed for general purpose applications. The encryption mechanism designed to optimize the combination function on encrypted data scales well, providing improvement in performance for large first and/or second datasets, for example, in comparison to general purpose homomorphic mechanisms that do not scale well and/or do not provide computation efficiency for large datasets. The encryption mechanism designed to combine encrypted datasets (as described herein) provides the optimal tradeoff between security, functionality, and fast computation time, which may be used, for example, to provide users with fast search times over large encrypted datasets, and/or in other applications, for example, in a secure network traffic management application, for instance, to find a certain network address in an encrypted address register.

The encryption mechanism designed to calculate the vector inner product on encrypted data, optionally only the vector inner product on encrypted data, provides improved performance over other homomorphic encryption mechanisms designed to provide greater number of functions over encrypted data, such as general purpose homomorphic mechanisms. The encryption mechanism is designed to provide improved performance for calculation of the vector inner product for large datasets, for example, allowing fast searches over large encrypted datasets.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

A computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

As used herein, the term *search* may sometimes mean execution of a *query.* The search or query execution may be applied to an encrypted index, and/or to the encrypted data instances.

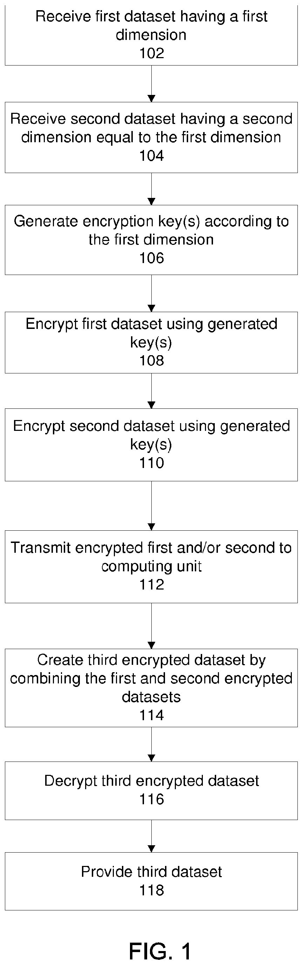

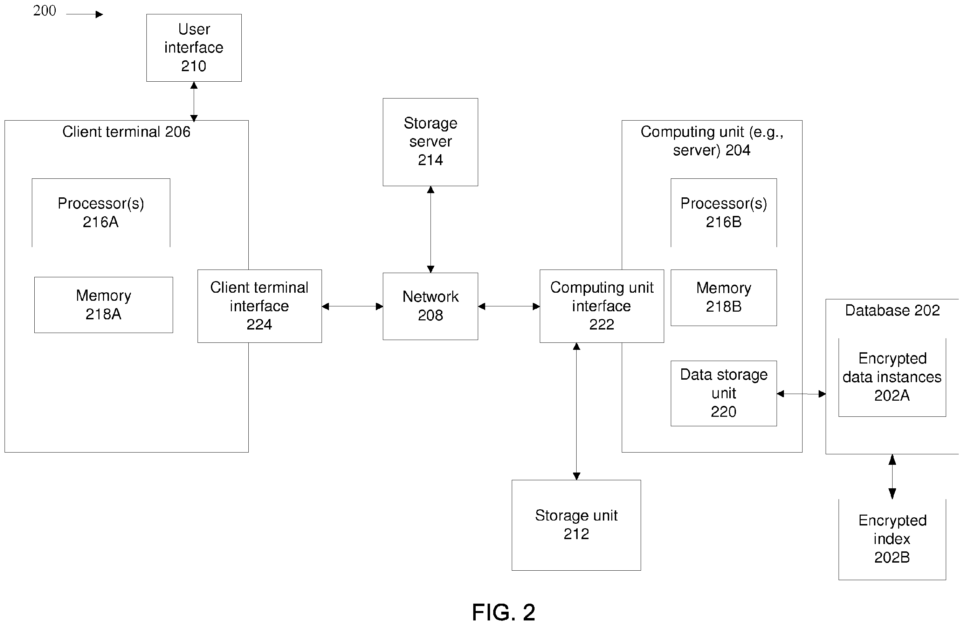

Reference is now made to FIG. 1, which is a flowchart of a method for searching and/or querying encrypted data stored in a database by computing a combination of an encrypted first dataset and an encrypted dataset that were encrypted using a symmetrical encryption key created according to a first dimension of the first and second datasets, in accordance with some embodiments of the present invention. Reference is also made to FIG. 2, which is a block diagram of components of a system 200 that searches over and/or applies a query to encrypted data instances by computing the combination of the encrypted first and second datasets, in accordance with some embodiments of the present invention. The operation to combine the encrypted first and second datasets improves performance of system 200, for example, in comparison to performing the combination operation using other homomorphic encryption mechanisms.

Database 202 stores data instances 202A encrypted using the created symmetrical encryption key, as described herein. It is noted that database 202 may be initially stored locally by a client terminal 206, and/or may be remotely accessed by client terminal 206. Database 202 may be transmitted by client terminal 206 to a computing unit 204 (e.g., a server) for secure storage and for searching over encrypted data instances 202A.

The data instances may be encrypted using at least indistinguishability under chose plaintext attack (IND-CPA) secure encryption. Each data instance includes one or more data entries. The data instances may include documents, or for example, emails, word processing documents, presentations, spreadsheets, application determined database entries, records, medical records, and portable document format (PDF) files. Data instances may include files, for example, images, music files, other audio files, videos, application defined files, and other data. Data entries may be, for example, words, paragraphs, metadata, pages, and related files.

As used herein, the terms *documents,* and *data instances* may sometimes be interchanged.

The data instances may be encrypted, for example, by a user using a user interface 210 of client terminal 206, by a remote server 214, or by other computing devices external to computing unit 204. The encrypted data instances 202A may be transmitted in the encrypted state to computing unit 204 (e.g., server) for secure storage and for searching over encrypted data instances 202A. It is noted that computing unit 204 may be unaware of the plaintext of encrypted data instances 202A, and/or may be unable to decrypt encrypted data instances 202A. In another example, the data instances are encrypted by computing unit 204.

Database 202 is in association with an encrypted index 202B. Encrypted index 202B may be created by encrypting the index using the generated symmetrical encryption key, as described herein. Encrypted index 202B maps data items (e.g., key word(s)) to one or more encrypted data instances 202A (e.g., document(s)) in which the respective data item is found. Encrypted data instances 202A of database 202 may be searched (e.g., as described herein) by performing a search over encrypted index 202B.

It is noted that system 200 represents multiple architectures which may be used to implement the method of FIG. 1 for searching database 202. As described herein, database 202 stores encrypted data instances 202A, and is associated with encrypted index 202B. In one implementation, database 202 is stored on computing unit (e.g., server) 204 in communication with one or more client terminals 206 over a network 208. A user may use user interface 210 to enter a search query for searching over database 202. The results may be displayed to the user on user interface 210 (or another user interface). In another implementation, database 202 is stored externally to computing unit 204, on a locally connected storage unit 212. In yet another implementation, database 202 is stored on a remote server 214 accessed by computing unit 204. In yet another implementation, computing unit 204 performs one or more functions of client terminal 206, and is in communication with user interface 210. In such an implementation, the user may use user interface 210 to enter the search query directly into computing unit 204 (e.g., client terminal 206 and computing unit 204 are implemented as a single unit). It is noted that database 202 may be a distributed database hosted by multiple computing units 204.

Exemplary client terminal(s) 206 include: mobile device, stationary device, server, smartphone, laptop, tablet computer, wearable computing device, glasses computing device, watch computing device, desktop computer, and a kiosk.

Computing unit 204 may be implemented, for example as, a network server, a web server, a computing cloud, a local server, a remote server, or a client terminal running code. Computing unit 204 may be implemented as a hardware component (e.g., standalone computing unit), as a software component (e.g., implemented within an existing computing unit), and/or as a hardware component inserted into an existing computing unit (e.g., plug-in card, attachable unit). The server implementation may provide services to client terminals by providing software as a service (SAAS), providing an application that may be installed on the client that communicates with the server, and/or providing functions using remote access sessions.

Each client terminal 206 and computing unit 204 includes a respective processor(s) 216A-B and respective memory 218A-B for storing instruction code executable by the respective processor(s) 216A-B.

Processor(s) 216A-B may be implemented, for example, as a central processing unit(s) (CPU), a graphics processing unit(s) (GPU), field programmable gate array(s) (FPGA), digital signal processor(s) (DSP), and application specific integrated circuit(s) (ASIC). Processor(s) 216A-B may include one or more processors (homogenous or heterogeneous), which may be arranged for parallel processing, as clusters and/or as one or more multi core processing units.

Memory 218A-B store code instructions executed by respective processor(s) 216A-B, for example, a random access memory (RAM), read-only memory (ROM), and/or a storage device, for example, non-volatile memory, magnetic media, semiconductor memory devices, hard drive, removable storage, and optical media (e.g., DVD, CD-ROM).

Computing unit 204 may include a storage unit 220 that act as a data repository for storing data, for example, a memory, a hard-drive, an optical disc, a temporary storage unit, an internal storage unit, and an external (optionally removable) storage unit. Database 202 may be hosted by storage unit 220.

Computing unit 204 may include a computing unit interface 222 for communication with one or more of: client terminal 206 (via network 208 and client interface 224), remote server 214 hosting database 202 (directly via interface 222 or indirectly via network 208), and storage unit 212 hosting database 202 (directly via interface 222 or indirectly via network 208 or another communication channel). Server interface 222 may be implemented, for example, as an interface to a remote storage server, an interface to a cloud server, a network interface, and/or an interface to other storage units.

Exemplary user interface 210 (which may be integrated with a display, or be implemented as a separate device) include one or more of: a touchscreen, a keyboard, a mouse, and voice activated software operating using speakers and microphone.

Network 208 may include, for example one or more of, the internet, a local area network (LAN), a wide area network, a private network, a virtual private network (VPN), a wireless network, and a cellular network.

One or more acts of the method of FIG. 1 may be performed, for example, by processor(s) 216B of computing unit 204 executing code instructions stored in memory 218B, and/or by processor(s) 216A of client terminal 206 executing code instructions stored in memory 218A.

The following are exemplary mathematical representations of functions executable by processor(s) 216A of client terminal 206 and/or processor(s) 216B of computing unit 204 used for encryption of datasets for performing the operation (e.g., vector inner product) on the encrypted datasets, as described herein:

> * $(sk, \delta) \leftarrow GenKey(1^{\theta}, n)$ denotes instructions (e.g., code executable by processor(s) to generate one or more keys for encrypting the datasets in a manner that allows performing the operation (e.g., vector inner product) on the encrypted dataset. $\theta$ denotes a security parameter, $n$ denotes the dimension (as described herein), $sk$ denotes an encryption key, and $\delta$ denotes a parameter vector.
>
> * $c \leftarrow Enc(p, sk, \delta)$ denotes instructions for encrypting the dataset (e.g., to create encrypted index 202B, sometimes referred to herein as the first dataset), as described herein. $p$ denotes the unencrypted dataset (e.g., optionally plaintext, optionally arranged as a vector or matrix). $c$ denotes the encrypted dataset (optionally ciphertext, optionally arranged as a vector or matrix).
>
> * $p \leftarrow Dec(c, sk)$ denotes instructions for decrypting c using $sk$ to obtain p.
>
> * $(q, qk) \leftarrow GenQuery(d, sk, \delta)$ denotes instructions for encrypting another dataset $d$ to create $q$ (e.g., to create an encrypted query for searching over encrypted index 202B, sometimes referred to herein as the second dataset), as described herein. $qk$ denotes a query key (also referred to herein as a second dataset set). It is noted that $q$ is optionally arranged as a vector or matrix.
>
> * $z \leftarrow AppQuery(c, q)$ denotes instructions for combining (optionally calculating the vector inner product) the encrypted query (i.e., the encrypted second dataset) with encrypted index 202B (i.e., the encrypted first dataset) to create z (also referred to herein as the encrypted third dataset, optionally arranged as a vector or matrix).
>
> * $m \leftarrow DecQ(z, q, qk, sk)$ denotes instructions for decrypting z using $q, qk$ and $sk$, to output decrypted $m$ (also referred to herein as the decrypted third dataset).

At 102, a first dataset arranged in a data structure having a first dimension is received. The first dataset may represent an index, or other data structure (e.g., map, links) representing relationships between data instances (e.g., documents, stored as encrypted data instances 202 in database 202) and data entities (e.g., keywords). Alternatively, the first dataset may be the data instances themselves (e.g., where an index is not available). The first dataset may be represented as a vector or matrix, with the first dimension representing the number of rows or columns of the vector or matrix. The vector and/or matrix format may be created by code when the first dataset is not provided in the vector and/or matrix format.

The first dataset may be received, for example, by a user using user interface 210 (e.g., navigating a graphical user interface (GUI)) of client terminal 206 to manually select the first dataset (e.g., select file(s) to be include as part of the first dataset, download the first dataset from a storage location, or other methods of designating the first dataset). The first dataset may be automatically created and/or received from code (e.g., an application and/or process running on the client terminal 206 and/or on another computer), for example, based on automated organization and/or collection of data.

The first dataset may be stored on client terminal 206, storage server 214, data storage unit 220 of computing unit 205, or other locations.

At 104, a second dataset having a second dimension is received. The second dimension being equal to first dimension of the first dataset. The second dataset may be represented as a vector or matrix, with the second dimension representing the number of rows or columns of the second dataset according to the dimensions of the first dataset. The vector and/or matrix format of the second dataset may be created by code when the second dataset is not provided in the vector and/or matrix format.

Optionally, the second dataset represents a query for searching over the first dataset, for example, one or more keywords optionally arranged using one or more Boolean literals. The query may be entered by the user using user interface 210 of client terminal 206 (and/or computing unit 204), for example, the user manually typing one or more keywords into the GUI presented on a display. The second dataset is used to search or apply a query (which may include one or more Boolean literals and/or other variables) to encrypted index 202B and/or to encrypted data instances 202A to identify one or more data instances stored in encrypted data instances 202A of database 202, for example, document(s) that includes the keyword(s), and/or document(s) satisfying the query. Optionally, the second dimension represents the number of keywords.

The second dataset may be automatically created and/or received from code (e.g., an application and/or process running on the client terminal 206 and/or on another computer), for example, to automatically obtain data elements from the database.

At 106, one or more symmetrical encryption keys are generated according to the first dimension of the first dataset. The symmetrical encryption key(s) may be generated, for example, based on code instructions (e.g., *GenKey*, executed by processor(s) 216A of client terminal 206, processor(s) 216B of computing unit 204, and/or another computing unit (e.g., a security server in communication with client terminal 206 and/or computing unit 204).

Optionally, the symmetrical encryption key includes a first encryption position vector for encryption of the first dataset and a second encryption position vector for encryption of the second dataset. The first encryption position vector and the second encryption position vector respectively define an order of elements of the first encrypted dataset and the second encrypted dataset. A permutation to another order of the elements of the first encrypted dataset and the second encrypted dataset is detectable using the respective first encryption position vector and the second encryption position vector. The position vector(s) pin the encrypted datasets to certain positions, which provides additional security by providing the ability to detect the permutation to another order of the elements, which may be indicative of tampering.

Optionally, a parameter vector is generated based on a security parameter and the dimension. The symmetrical encryption key may be generated based on the generated parameter vector.

An exemplary method for generating the symmetrical encryption key is now described (i.e., an exemplary implementation of the *GenKey* instructions):

Given $\theta$ and $n$ are integers >1, a vector (or other data structure representation) of real numbers $\delta' = (\delta_1, \delta_2, \delta_3, \delta_4)$ is computed, subject to the relationships:

$$2(1+ \delta_2) > \delta_1 > \delta_2 > \delta_3 > 2 > 1 + \delta_4 > 1,$$

and

$$(2 + \delta_2 + \delta_3)\,\theta + \log_2 n + 3 < \delta_1\theta.$$

Key sk is generated, where sk = $\{\mu, \alpha, \sigma, \rho, \kappa, K\}$.

n denotes the dimension of the number of elements per encryption block, for example, $n = 100$ when there are 100 keywords being searched for.

$\theta$ denotes the encryption level, for example, to encrypt with 100 bit security.

With an integer $\mu \in [2^{\delta_1 \theta - 1}, 2^{\delta_1 \theta})$ and an integer $\alpha \in [2^{\delta_1 \theta - 2}, 2^{\delta_1 \theta - 1})$ selected such that a greatest common denominator (gcd) $\gcd(\mu, \alpha) = 1$, an integer $\sigma \in [2^{\theta - 1}, 2^{\theta})$, vectors $\rho = (\rho_0, ..., \rho_n)$, $\kappa = (\kappa_0, ..., \kappa_n)$ with integer coefficients $\rho_i, \kappa_i \in [1, \sigma - 1]$, for $i = 0, ..., n$, and an integer $K \in [1, \sigma - 1]$, under the relationship $\gcd(\kappa_n, \sigma) = 1$. The integers may be selected uniformly at random.

The exemplary method creates symmetrical encryption key *sk* and parameter vector $\delta = (\theta, \delta')$.

At 108, the first dataset is encrypted (optionally by client terminal 206 and/or computing unit 204) using the generated symmetrical encryption key, optionally according to the instructions *Enc.* Optionally, the first dataset (and the second dataset as described with reference to block 110) are encrypted using the parameter vector $\delta$ and the symmetrical

encryption key $sk$.

The first dataset is encrypted using a first parameter of the parameter vector, and the second dataset is encrypted using a second parameter of the parameter vector, as described herein.

The encryption of element(s) of the first dataset and elements of the second dataset is based on computing a first value modulo a second value masked with a non-deterministic third value, where the non-deterministic third value and the second value are maintained in a secret state, as described herein. The encryption mechanism hides the modulus o the underlying arithmetic domain, which improves security by hardening the system against lattice based attacks.

An exemplary method for encrypting the first dataset using the created symmetrical encryption key is now described (i.e., an exemplary implementation of the *Enc* instructions):

Given symmetrical encryption key sk = $\{\mu, \alpha, \sigma, \rho, \kappa, K\}$, parameter vector $\delta = (\theta, \delta_1, \delta_2, \delta_3, \delta_4)$, and first dataset (optionally represented as a vector or matrix) p = $(p_0, ..., p_{n-1})$ consisting of integer values $p_i \in [1, \sigma - 1]$, for $i = 0, ..., n - 1$, an integer $p_i \in [1, \sigma - 1]$ is computed such that

$$\sum_{i=0}^{n} p_i \kappa_i \equiv K \bmod \sigma.$$

An integer A $\in [2^{\delta_1 \theta - 2}, 2^{\delta_1 \theta - 1})$ is selected uniformly at random.

For $i = 0, ..., n,$ the smallest nonnegative integer $c_i$ is selected such that

$$c_i \equiv \alpha \left( a_i \sigma + p_i + A \varrho_i \right) \bmod t_i \mu,$$

where:

$c_i$ denotes an element of the encrypted first dataset.
$\alpha$, $\sigma$, and $\mu$ are members of the symmetrical encryption key.
$\rho_i$ denotes an elements of an encryption position vector defining an order of elements of the first encrypted dataset, the encryption position vector being a member of the symmetrical encryption key.
$p_i$ denotes an elements of the data structure of the first dataset in an unencrypted state.
$A$, $a_i$, and $t_i$ are non-deterministic values.
$a_i \in [2^{\delta_3 \theta - 1}, 2^{\delta_3 \theta})$, and $t_i \in [1, 2^{\delta_4 \theta})$ are integers chosen uniformly at random.

For integers $a_{n+1} \in [1, 2^{\theta})$ and $t_{n+1} \in [1, 2^{\delta_4 \theta})$ chosen uniformly at random, the smallest nonnegative integer $c_{n+1}$ is computed such that

$$c_{n+1} \equiv \alpha \left( a_{n+1} \sigma + A \right) \bmod t_{n+1} \mu$$

where:

$c_{n+1}$ may denote an encrypted random initialization vector (IV).
$c_{n+1}$ denotes an element of the encrypted first dataset.
$\alpha$, $\sigma$, and $\mu$ are members of the symmetrical encryption key.
$A$, $a_{n+1}$, and $t_{n+1}$ are non-deterministic values.

The exemplary method creates the encrypted first dataset represented as vector (or matrix) c = $(c_0, ..., c_{n+1})$.

At 110, the second dataset is encrypted (optionally by client terminal 206 and/or computing unit 204) using the symmetrical encryption key, optionally according to the instructions *GenQuery*.

The second dataset is encrypted using a query key associated with the encrypted second dataset.

An exemplary method for encrypting the second dataset using the created symmetrical encryption key is now described (i.e., an exemplar implementation of the *GenQuery* instructions):

Given symmetrical encryption key sk = $\{\mu, \alpha, \sigma, \rho, \kappa, K\}$, parameter vector $\delta = (\theta, \delta_1, \delta_2, \delta_3, \delta_4)$, and second dataset (optionally represented as a vector or matrix) d = $(d_0, ..., dn)$ where integers $d_i \in [0, \sigma - 1]$, for $i = 0, ..., n,$ an integer $\gamma \in [2^{\delta_1 \theta - 2}, 2^{\delta_1 \theta - 1})$ is selected such that gcd(y, $\mu$) = 1. An integer $V \in [0, \sigma - 1]$ is selected uniformly at random. For $i = 0, ..., n,$ the smallest nonnegative integer $qi$ is calculated according to:

$$q_i \equiv \gamma \left( b_i \sigma + d_i + V \kappa_i \right) \bmod s_i \mu$$

where:

$q_i$ denotes an element of the encrypted second dataset.

$\sigma$, and $\mu$ are members of the symmetrical encryption key.

$\kappa_i$ denotes an element of an encryption position vector defining an order of elements of the second encrypted dataset, the encryption position vector being a member of the symmetrical encryption key.

$\gamma$ and $V$ are members of a query key used in the process of decrypting the third encrypted dataset.

$d_i$ denotes an elements of the vector of the second dataset in an unencrypted state.

$b_i$ and $s_i$ are non-deterministic values.

$b_i \in [2^{\delta_2 \theta - 1}, 2^{\delta_2 \theta})$, and $s_i \in [1, 2^{\delta_4 \theta})$ are integers chosen uniformly at random.

The exemplary method creates the encrypted second dataset represented as vector (or matrix) q = $(q_0, ..., q_{n+1})$, and optionally creates query key qk = $(\gamma, V)$.

At 112, the encrypted first dataset and/or the encrypted second dataset are transmitted by client terminal 206 to computing unit 204 (e.g., a server, a computing cloud) for storage.

At 114, the encrypted third dataset is created and provided. The computing unit 204 calculates the encrypted third dataset and transmits the encrypted third dataset to client terminal 206.

The encrypted third dataset is a combination of the encrypted first dataset and the encrypted second dataset. The combination operation is performed while the first dataset and the second dataset are in the encrypted state, allowing computing unit 204 to act as a high performance secure storage facility that provides search and/or database query functions for remote client terminals 206 on the stored encrypted data instances 202A without necessarily having the ability to decrypted encrypted data instances 202A to access the decrypted data.

Computing unit 204 (and/or client terminal 206) calculates the encrypted third dataset, optionally represented as a vector or matrix, also referred to herein as a *result vector.*

An exemplary method for calculating the result vector is now described (i.e., an exemplary implementation of the *AppQuery* instructions):

The result vector decrypted by client terminal 206 to obtain the decrypted third dataset. The result vector z = $(z_0, z_1)$ is calculated based on the inner produce of the encrypted first dataset c = $(c_0, ..., c_{n+1})$ and the encrypted second dataset q = $(q_0, ..., q_{n+1})$, subject to:

$$z_0 = \sum_{i=0}^{n} c_i q_i \quad \text{and} \quad z_1 = c_{n+1}.$$

where:

$c_i$ denotes an element of the encrypted first dataset.

$q_i$ denotes an element of the encrypted second dataset.

At 116, the encrypted third dataset (i.e., the result vector) is decrypted (optionally by client terminal 206). The decryption is performed using the symmetrical encryption key. The encrypted third dataset is decrypted using the symmetrical encryption key and the query key.

An exemplary method for decrypting the result vector is now described (i.e., an exemplary implementation of the *Dec* and *DecQ* instructions).

The exemplary implementation of the *DecQ* instructions includes:

Given the result vector (i.e., the encrypted third dataset) z = $(z_0, z_1)$, the encrypted query vector $q$, the query key qk = $(\gamma, V)$, and the encryption key sk = $\{\mu, \alpha, \sigma, \rho, \kappa, K\}$, an integer $\tau$ is calculated such that:

$\tau \alpha \gamma \equiv 1 \bmod \mu$

The smallest nonnegative integer m' (which denotes an intermediate value calculated during the decryption process) is calculated such that:

$$m' \equiv \tau \left( z_0 - z_1 \sum_{i=0}^{n} \varrho_i q_i \right) \bmod \mu$$

to calculate the smallest nonnegative integer m subject to:

$$m \equiv m' - VK \bmod \sigma$$

where:

m denotes the decrypted values of the third dataset.
$K$ is a member of the symmetric encryption key.

The value $m$ may be used to guide the decryption of the encrypted identified document, and/or the decryption of the identified index location of the identified document. The decrypted result m may be used to identify one or more data instances (e.g., document(s)) stored in database 202 satisfying the query. One or more of the identified data instances may be retrieved by client terminal 206 and decrypted using the exemplary implementation of the *Dec* instructions:
Given the encrypted first dataset represented as vector c = $(c_0, ..., c_{n+1})$ and the symmetrical encryption key sk = $\{\mu, \alpha, \sigma, \rho, \kappa, K\}$, an integer $\alpha'$ is calculated such that:

$$\alpha' \alpha \equiv 1 \bmod \mu$$

For $i = 0, ..., n - 1$, the smallest nonnegative integer $p'_i$ is calculated subject to the relationship:

$$p'_i \equiv \alpha'(c_i - c_{n+1}\varrho_i) \bmod \mu$$

The exemplary implementation of the *Dec* method creates the decrypted first dataset vector p = $(p_0, ..., p_{n-1})$, where for $i = 0, ..., n - 1$, the coefficient $p_i$ is the smallest nonnegative integer such that:

$$p_i \equiv p'_i \bmod \sigma$$

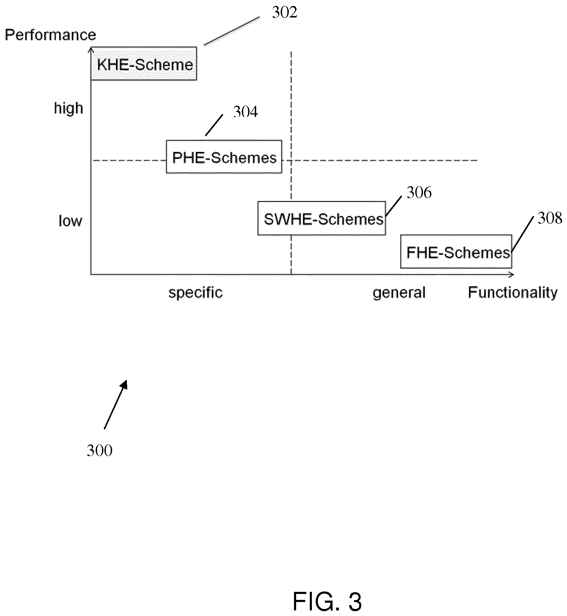

At 118, the decrypted third dataset and/or the decrypted data instance(s) is provided. The decrypted data instances may be presented on the display of client terminal 206, stored on client terminal 206, and/or transmitted (e.g., to another computing unit and/or storage unit).
The decrypted third dataset represents, for example, the document that includes the keyword(s) entered by the user as the query.
Reference is now made to FIG. 3, which is a graph 300 conceptually depicting the technical improvement in computing performance achievable by the systems and/or apparatus described herein, in accordance with some embodiments of the present invention. The systems and/or methods described herein (represented as box 302) provide a technical improvement in terms of reduced processing time, and/or reduced computational resources (e.g., memory, processor(s)) as compared to other methods, such as 304, 306, and 308. The improvement in performance is based on the design of the systems and/or methods described herein 302, which is designed for a certain defined combination as described herein, in comparison to other methods that are designed for general purpose applications, for example, allowing for arbitrary combinations. For example, other methods may support both operations: c3=cl+c2 and c4=clxc2, where c1-c4 are ciphertexts.
Box 304 represents Partially Homomorphic Encryption (PHE) schemes that provide limited functionality on encrypted data and are unable to scale to support operations on large datasets. Box 306 represents Somewhat Homomorphic Encryption (SWHE) schemes that support additional functions on encrypted data at a cost of a further reduction in system performance. Fully Homomorphic Encryption (FHE) schemes provide the greatest number of functions on encrypted data at a cost of an inefficient system. It is noted that in contrast to the systems and/or methods described herein (box 302), the methods represented by boxes 304, 306, and 308 are unable to scale to handle large datasets.

Other methods (represented by boxes 304, 306, and 308) are too slow for practical application, for example, combination of large encrypted datasets, such as matrix-vector multiplication, for example, to allow for fast searches and/or queries over a large set of encrypted data. For example, one implementation of SWHE scheme 306 is estimated to take about 27 milliseconds (ms) for each evaluation round, using standard computing hardware. To search 100 encrypted emails on the basis of 500 keywords in a non-optimized way (e.g., a search query that request all emails of the user containing the phrase *project Ascend P8*) takes 22 minutes, which cannot be practically used by users to search encrypted emails. In contrast, the systems and/or methods described herein (box 302) perform the same (or similar) search using the same (or similar) computer hardware in less than about 1 second (where emails are encrypted using 100 bit encryption).

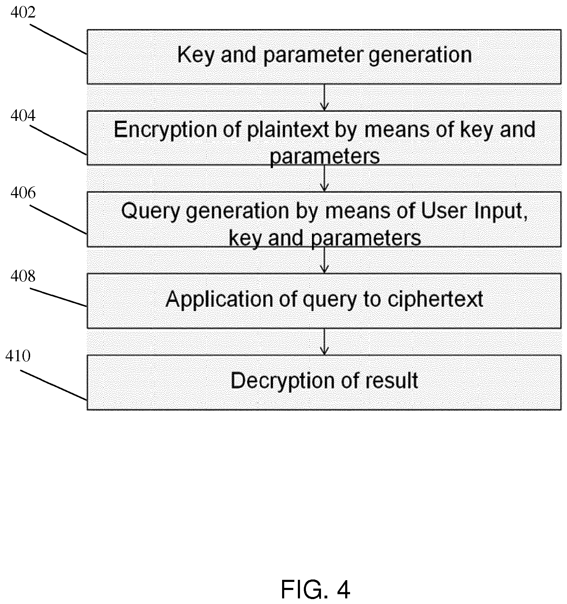

Reference is now made to FIG. 4, which is another flowchart of an exemplary method of encrypting a first and second datasets using an encryption method designed to allow combination of the first and second datasets in the encrypted state, in accordance with some embodiments of the present invention. The method described with reference to FIG. 4 may be implemented by system 200 described with reference to FIG. 2.

At 402, keys and parameters (as described herein) are generated, for example, by a client terminal, or a security server, or other computing unit.

As described herein, the symmetrical key sk = $\{\mu, \alpha, \sigma, \rho, \kappa, K\}$ is generated. In an exemplar implementation described herein, sk includes 4 single keys used for masking and 2 vectors used for supporting masking of entire sets. The parameters $\delta = (\theta, \delta_1, \delta_2, \delta_3, \delta_4)$ and $\theta, n > 1$ are defined under the relationships described herein.

At 404, a plaintext index that maps data items to data instances stored in a database is encrypted using the key and parameters, as described herein. An encrypted random IV may be added, as described herein.

At 406, a search query for searching over the encrypted data stored in the database is received from the user, and encrypted, as described herein.

At 408, the encrypted query is combined with the encrypted index (in the encrypted state) by calculation of the inner product of the vectors, to generated encrypted results, as described herein.

At 410, the encrypted results are decrypted using the symmetric key, as described herein.

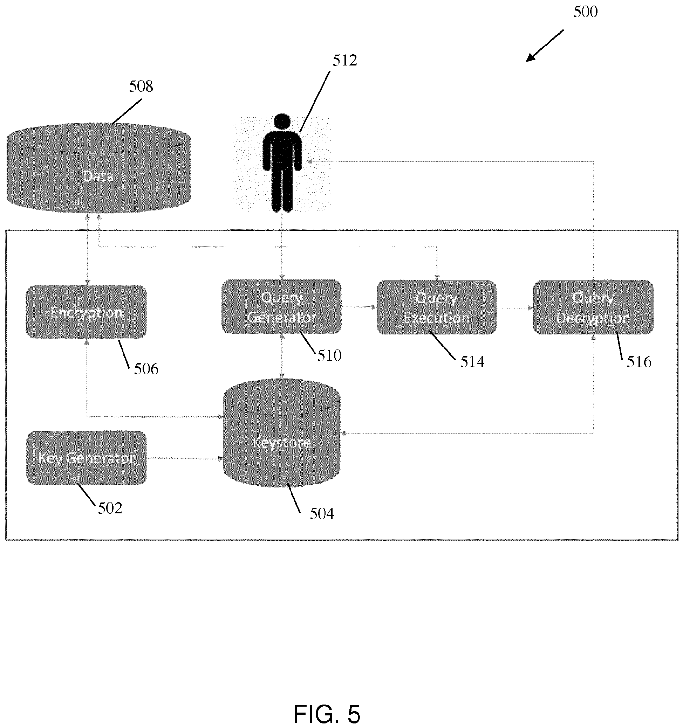

Reference is now made to FIG. 5, which is a block diagram of an exemplary architecture 500 for encrypting a first and second dataset using an encryption mechanism designed to optimally combine the first and second datasets in the encrypted state, in accordance with some embodiments of the present invention. Architecture 500 may represent an exemplary implementation based on FIG. 1, and/or based on system 200 of FIG. 2.

Key generator code 502 is executed by a processor(s) to generate the key(s) and parameter(s) described herein used for encryption of the first and second datasets, and decryption of the third dataset. The generated key(s) and parameter(s) are stored in a keystore 504 data repository device.

Encryption code 506 uses the stored key(s) and parameter(s) to encrypt data instances stored in data repository 508, to create the first encrypted dataset, for example, an encrypted index of the stored data instances.

Query generator code 510 receives a query (i.e., the second dataset). The received query is processed into a data structure defined by the encryption mechanism described herein, optionally a query vector or matrix. The second dataset is encrypted using key(s) and parameter(s) from keystore 504, as described herein. The query may be received from a user using a user interface of a client terminal 512, for example, entering keyword(s) into a search and/or database query application.

Query execution code 514 calculates the vector inner product on the encrypted first and second datasets to create a third encrypted dataset. The vector inner product is calculated while the first and second datasets are in the encrypted form.

Query decryption code 516 decrypts the encrypted third dataset using the key(s) stored in keystore 504. The user using client terminal 512 may fetch one or more documents from data store 508 according to the decrypted third dataset.

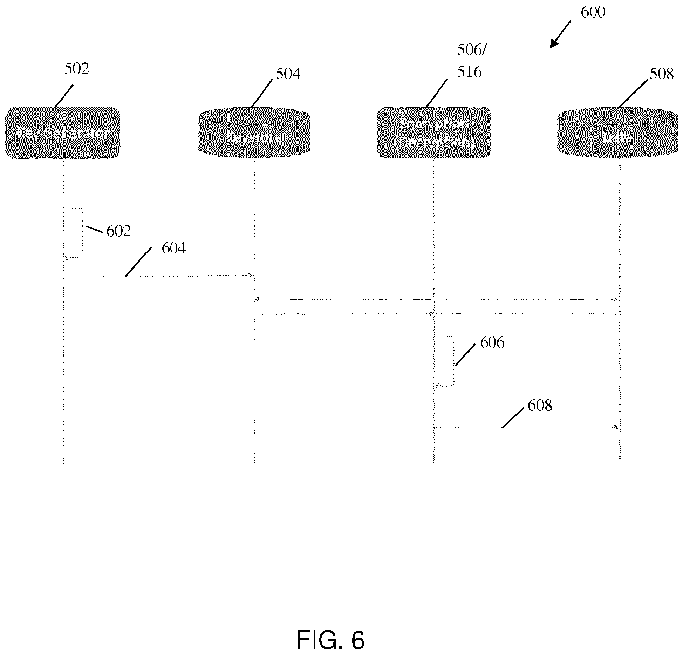

Reference is now made to FIG. 6, which is an exemplary dataflow diagram 600 for encrypting a first and second dataset using an encryption mechanism designed to optimally combine the first and second datasets in the encrypted state, in accordance with some embodiments of the present invention. Dataflow diagram 600 may represent an exemplary implementation based on FIG. 1, and/or based on system 200 of FIG. 2, and/or based on architecture 500 of FIG. 5. Components are numbered and are as described with reference to FIG. 5.

At 602, key generator code 502 creates one or more keys and parameters according to the relationships described herein.

At 604, the generated key(s) and parameters are stored in keystore 504.

At 606, the first dataset is encrypted by encryption code 506 using the key(s) and parameters fetched from keystore 504, as described herein. The encryption may be performed, for example, as a batch job for existing data instances, as well as for additional data instances received at runtime.

At 608, the encrypted first dataset is stored in data store 508. The decryption of data (e.g., data instances selected by the user based on the search results) may be performed by decryption code 516 using the key(s) stored in keystore 504, as described herein.

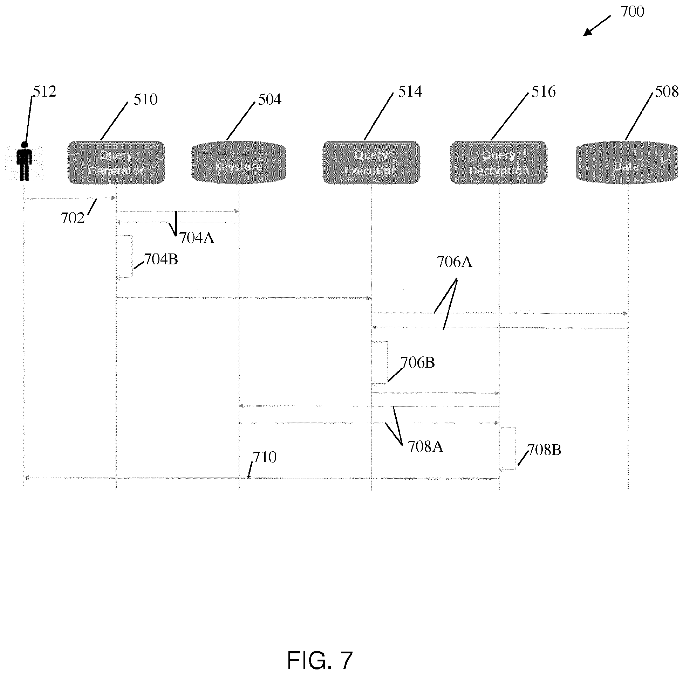

Reference is now made to FIG. 7, which is an exemplary dataflow diagram 700 for encrypting a first and second dataset using an encryption mechanism designed to optimally combine the first and second datasets in the encrypted state, in accordance with some embodiments of the present invention. Dataflow diagram 700 depicts an exemplary dataflow of the process of querying data (e.g., searching the data) at runtime. Dataflow diagram 700 may represent an exemplary implementation based on FIG. 1, and/or based on system 200 of FIG. 2, and/or based on architecture 500 of FIG. 5, and/or based on dataflow diagram 600 of FIG. 6. Components are numbered and are as described with reference to FIG. 5.

At 702, a user uses client terminal 512 to enter a query, for example, a business query such as "profit reported by a certain business unit during a certain quarter of the current year". In another example, the query represents a process asking for "all reported outages of a certain communication line in a certain period of time".

At 704A, the query is received by Query Generator code 510 which requests the symmetrical encryption key(s) and/or parameter(s) from keystore 504.

At 704B, Query Generator code 510 creates the encrypted query vector, as described herein.

At 706A, Query Execution code 514 gathers the encrypted data from data store 508.

At 706B, Query Execution code 514 creates a result vector by computing the vector inner product by combining the encrypted query vector with the encrypted data instances, as described herein.

At 708A, Query Decryption code 516 obtains decryption key(s) from keystore 504.

At 708B, Query Decryption code 516 decrypts the created result vector using the decryption key(s).

At 710, the encrypted results are provide to client terminal 512 for presentation to the user, and/or use by the application or process that initiated the query.

The descriptions of the various embodiments of the present invention have been presented for purposes of illustration, but are not intended to be exhaustive or limited to the embodiments disclosed. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant databases storing data instances will be developed and the scope of the term database and the term data instance include all such new technologies a priori.

As used herein the term "about" refers to $\pm$ 10 %.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

To the extent that section headings are used, they should not be construed as necessarily limiting.

**Claims**

1. An apparatus for searching over an encrypted dataset, wherein the apparatus is configured to:

receive a first dataset arranged in a data structure having a first dimension, wherein the data structure represents a relationship between documents and keywords and the first dimension represents the number of keywords;
receive a second dataset having a second dimension, wherein the second dimension is equal to the first dimension and the second dataset represents a query comprising at least one keyword for searching over the first dataset to identify at least one document that includes the keyword;
generate a symmetrical encryption key according to the first dimension;
encrypt the first dataset using the symmetrical encryption key;
encrypt the second dataset using the symmetrical encryption key;
transmit the encrypted first dataset and the encrypted second dataset to a server for storage;
receive from the server an encrypted third dataset;
decrypt the encrypted third dataset using the symmetrical encryption key; and
output the decrypted third dataset;
wherein the encrypted third dataset is a combination of the encrypted first dataset and the encrypted second dataset, wherein combination is performed while the first dataset and the second dataset are in the encrypted state, wherein the third dataset represents the at least one document that includes the at least one keyword; and
wherein the symmetrical encryption key includes a first encryption position vector for encryption of the first dataset and a second encryption position vector for encryption of the second dataset, wherein the first encryption position vector and the second encryption position vector respectively define an order of elements of the first encrypted dataset and the second encrypted dataset, wherein a permutation to another order of the elements of the first encrypted dataset and the second encrypted dataset is detectable using the respective first encryption position vector and the second encryption position vector;
wherein the first dataset is encrypted using the symmetrical encryption key based on the relationship:

$$c_i \equiv \alpha \left( a_i \sigma + p_i + A \varrho_i \right) \bmod t_i \mu,$$

wherein:

$c_i$ denotes an element of the encrypted first dataset;
$\alpha$, $\sigma$, and $\mu$ are members of the symmetrical encryption key;
$p_i$ denotes an elements of an encryption position vector defining an order of elements of the first encrypted dataset, the encryption position vector being a member of the symmetrical encryption key;
$p_i$ denotes an elements of the data structure of the first dataset in an unencrypted state; and
$A$, $a_i$, and $t_i$ are non-deterministic values;

wherein the second dataset is encrypted using the symmetrical encryption key based on the relationship:

$$q_i \equiv \gamma \left( b_i \sigma + d_i + V \kappa_i \right) \bmod s_i \mu$$

wherein:

$q_i$ denotes an element of the encrypted second dataset;
$\sigma$, and $\mu$ are members of the symmetrical encryption key;
$\kappa_i$ denotes an element of an encryption position vector defining an order of elements of the second encrypted dataset, the encryption position vector being a member of the symmetrical encryption key;
$\gamma$ and $V$ are members of a query key used in the process of decrypting the third encrypted dataset;
$d_i$ denotes an elements of the vector of the second dataset in an unencrypted state; and
$b_i$, and $s_i$ are non-deterministic values.

2. The apparatus of claim 1, wherein the data structure of the first dataset and the second data set comprise a vector and the combination of the first and second encrypted data sets includes a vector inner product.

3. The apparatus of any of the previous claims, wherein the apparatus is further configured to:
generate a parameter vector based on a security parameter and the dimension and, wherein the symmetrical encryption key is generated based on the parameter vector.

4. The apparatus of claim 3, wherein the first dataset and the second dataset are encrypted using the parameter vector and the symmetrical encryption key.

5. The apparatus of claim 4, wherein the first dataset is encrypted using a first parameter of the parameter vector, and the second dataset is encrypted using a second parameter of the parameter vector.

6. The apparatus of claim 5, wherein encrypting the second dataset comprises creating a query key associated with the encrypted second dataset, wherein decrypting the encrypted third dataset is performed using the symmetrical encryption key and the query key.

7. The apparatus of any of the previous claims, wherein the encryption of at least one of elements of the first dataset and elements of the second dataset is based on computing a first value modulo a second value masked with a non-deterministic third value, wherein the non-deterministic third value and the second value are maintained in a secret state.

8. The apparatus of any of the previous claims, wherein the encryption further comprises adding an encrypted random initialization vector (IV) according to the relationship:

$$c_{n+1} \equiv \alpha \left( a_{n+1}\sigma + A \right) \bmod t_{n+1}\mu$$

wherein:

cn+1 denotes an element of the encrypted first dataset;
$\alpha$, $\sigma$, and $\mu$ are members of the symmetrical encryption key; and
A, an+1, and tn+1 are non-deterministic values.

9. The apparatus of any of the previous claims, wherein the server is further configured to calculate a result vector used for decryption of the third dataset, wherein the result vector is calculated based on the inner produce of the encrypted first dataset by the encrypted second dataset, represented by the relationship:

$$\mathbf{z} = (z_0, z_1)$$

$$z_0 = \sum_{i=0}^{n} c_i q_i \quad \text{and} \quad z_1 = c_{n+1}.$$

wherein:

z denotes the result vector;
ci denotes an element of the encrypted first dataset;
qi denotes an element of the encrypted second dataset.

10. The apparatus of claim 9, wherein the decryption of the encrypted third dataset is based on the relationship:

$$m' \equiv \tau \left( z_0 - z_1 \sum_{i=0}^{n} \varrho_i q_i \right) \bmod \mu,$$

$$m \equiv m' - VK \bmod \sigma.$$

wherein:

m denotes the decrypted values of the third dataset;
K is a member of the symmetric encryption key; and
m' denotes an intermediate value calculated during the decryption process.

**11.** A system for searching over an encrypted dataset, wherein the system comprises the apparatus according to any of the preceding claims in network communication with a server, wherein the server is configured to calculate the combination of the encrypted first dataset and the encrypted second dataset.

**Patentansprüche**

**1.** Vorrichtung zur Suche über einen verschlüsselten Datensatz, wobei die Vorrichtung dazu konfiguriert ist:

einen ersten Datensatz zu empfangen, der in einer Datenstruktur mit einer ersten Dimension angeordnet ist, wobei die Datenstruktur eine Beziehung zwischen Dokumenten und Schlüsselwörtern darstellt und die erste Dimension die Anzahl der Schlüsselwörter darstellt;
einen zweiten Datensatz mit einer zweiten Dimension zu empfangen, wobei die zweite Dimension gleich der ersten Dimension ist und der zweite Datensatz eine Abfrage darstellt, die mindestens ein Schlüsselwort zur Suche über den ersten Datensatz umfasst, um mindestens ein Dokument zu identifizieren, das das Schlüsselwort enthält;
einen symmetrischen Verschlüsselungsschlüssel gemäß der ersten Dimension zu erzeugen;
den ersten Datensatz unter Verwendung des symmetrischen Verschlüsselungsschlüssels zu verschlüsseln;
den zweiten Datensatz unter Verwendung des symmetrischen Verschlüsselungsschlüssels zu verschlüsseln;
den verschlüsselten ersten Datensatz und den verschlüsselten zweiten Datensatz zur Speicherung an einen Server zu übertragen;
vom Server einen verschlüsselten dritten Datensatz zu empfangen;
den verschlüsselten dritten Datensatz unter Verwendung des symmetrischen Verschlüsselungsschlüssels zu entschlüsseln; und
den entschlüsselten dritten Datensatz auszugeben;
wobei der verschlüsselte dritte Datensatz eine Kombination des verschlüsselten ersten Datensatzes und des verschlüsselten zweiten Datensatzes ist, wobei die Kombination durchgeführt wird, während sich der erste Datensatz und der zweite Datensatz im verschlüsselten Zustand befinden, wobei der dritte Datensatz das mindestens eine Dokument darstellt, das das mindestens eine Schlüsselwort enthält; und
wobei der symmetrische Verschlüsselungsschlüssel einen ersten Verschlüsselungspositionsvektor zum Verschlüsseln des ersten Datensatzes und einen zweiten Verschlüsselungspositionsvektor zum Verschlüsseln des zweiten Datensatzes enthält, wobei der erste Verschlüsselungspositionsvektor und der zweite Verschlüsselungspositionsvektor jeweils eine Reihenfolge von Elementen des ersten verschlüsselten Datensatzes und des zweiten verschlüsselten Datensatzes definieren, wobei eine Permutation zu einer anderen Reihenfolge der Elemente des ersten verschlüsselten Datensatzes und des zweiten verschlüsselten Datensatzes unter Verwendung des jeweiligen ersten Verschlüsselungspositionsvektors und des zweiten Verschlüsselungspositionsvektors detektierbar ist;
wobei der erste Datensatz unter Verwendung des auf der Beziehung basierenden symmetrischen Verschlüsselungsschlüssels verschlüsselt wird:

$$c_i \equiv \alpha(a_i\sigma + p_i + A\varrho_i) \bmod t_i\mu,$$

wobei:

$c_i$ ein Element des verschlüsselten ersten Datensatzes bezeichnet;
$\alpha$, $\sigma$ und $\mu$ Teile des symmetrischen Verschlüsselungsschlüssels sind;
$p_i$ ein Element eines Verschlüsselungspositionsvektors bezeichnet, der eine Reihenfolge von Elementen des ersten verschlüsselten Datensatzes definiert, wobei der Verschlüsselungspositionsvektor ein Teil des symmetrischen Verschlüsselungsschlüssels ist;
$p_i$ ein Element der Datenstruktur des ersten Datensatzes in einem unverschlüsselten Zustand bezeichnet;

und

A, ai und ti nicht deterministische Werte sind;

wobei der zweite Datensatz unter Verwendung des auf der Beziehung basierenden symmetrischen Verschlüsselungsschlüssels verschlüsselt wird:

$$q_i \equiv \gamma\big(b_i\sigma + d_i + V_{\kappa_i}\big) mod\ s_i\mu$$

wobei:

qi ein Element des verschlüsselten zweiten Datensatzes bezeichnet;

$\sigma$ und $\mu$ Teile des symmetrischen Verschlüsselungsschlüssels sind;

$\kappa_i$ ein Element eines Verschlüsselungspositionsvektors bezeichnet, der eine Reihenfolge von Elementen des zweiten verschlüsselten Datensatzes definiert, wobei der Verschlüsselungspositionsvektor ein Teil des symmetrischen Verschlüsselungsschlüssels ist;

$\gamma$ und *V* Teile eines Abfrageschlüssels sind, der im Prozess der Entschlüsselung des dritten verschlüsselten Datensatzes verwendet wird;

di ein Element des Vektors des zweiten Datensatzes in einem unverschlüsselten Zustand bezeichnet; und

bi und si nicht deterministische Werte sind.

2. Vorrichtung nach Anspruch 1, wobei die Datenstruktur des ersten Datensatzes und des zweiten Datensatzes einen Vektor umfassen und die Kombination des ersten und des zweiten verschlüsselten Datensatzes ein vektorielles inneres Produkt enthält.

3. Vorrichtung nach einem der vorhergehenden Ansprüche, wobei die Vorrichtung ferner dazu konfiguriert ist:
einen Parametervektor basierend auf einem Sicherheitsparameter und der Dimension zu erzeugen, und wobei der symmetrische Verschlüsselungsschlüssel basierend auf dem Parametervektor erzeugt wird.

4. Vorrichtung nach Anspruch 3, wobei der erste Datensatz und der zweite Datensatz unter Verwendung des Parametervektors und des symmetrischen Verschlüsselungsschlüssels verschlüsselt werden.

5. Vorrichtung nach Anspruch 4, wobei der erste Datensatz unter Verwendung eines ersten Parameters des Parametervektors verschlüsselt wird, und der zweite Datensatz unter Verwendung eines zweiten Parameters des Parametervektors verschlüsselt wird.

6. Vorrichtung nach Anspruch 5, wobei das Verschlüsseln des zweiten Datensatzes das Erzeugen eines Abfrageschlüssels umfasst, der dem verschlüsselten zweiten Datensatz zugeordnet ist, wobei das Entschlüsseln des verschlüsselten dritten Datensatzes unter Verwendung des symmetrischen Verschlüsselungsschlüssels und des Abfrageschlüssels durchgeführt wird.

7. Vorrichtung nach einem der vorhergehenden Ansprüche, wobei die Verschlüsselung von mindestens einem der Elemente des ersten Datensatzes und der Elemente des zweiten Datensatzes auf der Berechnung eines ersten Wertes modulo eines zweiten Wertes basiert, der mit einem nicht deterministischen dritten Wert maskiert ist, wobei der nicht deterministische dritte Wert und der zweite Wert in einem geheimen Zustand gehalten werden.

8. Vorrichtung nach einem der vorhergehenden Ansprüche, wobei die Verschlüsselung ferner das Hinzufügen eines verschlüsselten Zufalls-Initialisierungsvektors (IV) gemäß der folgenden Beziehung umfasst:

$$c_{n+1} \equiv \alpha(a_{n+1}\sigma + A) mod\ t_{n+1}\mu$$

wobei:

cn+ 1 ein Element des verschlüsselten ersten Datensatzes bezeichnet;

$\alpha,\ \sigma$ und $\mu$ Teile des symmetrischen Verschlüsselungsschlüssels sind; und

A, an+ 1 und tn+ 1 nicht deterministische Werte sind.

9. Vorrichtung nach einem der vorhergehenden Ansprüche, wobei der Server ferner dazu konfiguriert ist, einen Ergebnisvektor zu berechnen, der für die Entschlüsselung des dritten Datensatzes verwendet wird, wobei der Ergebnisvektor basierend auf dem inneren Produkt des verschlüsselten ersten Datensatzes durch den verschlüsselten zweiten Datensatz, dargestellt durch die folgende Beziehung, berechnet wird:

$$z = (z_0, z_1)$$

$$z_0 = \sum_{i=0}^{n} c_i q_i \text{ und } z_1 = c_{n+1}$$

wobei:

z den Ergebnisvektor bezeichnet;
$c_i$ ein Element des verschlüsselten ersten Datensatzes bezeichnet;
$q_i$ ein Element des verschlüsselten zweiten Datensatzes bezeichnet.

10. Vorrichtung nach Anspruch 9, wobei die Entschlüsselung des verschlüsselten dritten Datensatzes auf der folgenden Beziehung basiert:

$$m' \equiv \tau(z_0 - z_1 \sum_{i=0}^{n} \varrho_i q_i) mod \ \mu \ ,$$

$$m \equiv m' - VK \ mod \ \sigma.$$

wobei:

m die entschlüsselten Werte des dritten Datensatzes bezeichnet;
K ein Teil des symmetrischen Verschlüsselungsschlüssels ist; und
m' einen Zwischenwert bezeichnet, der während des Entschlüsselungsvorgangs berechnet wird.

11. System zur Suche über einen verschlüsselten Datensatz, wobei das System die Vorrichtung nach einem der vorhergehenden Ansprüche in Netzwerkkommunikation mit einem Server umfasst, wobei der Server dazu konfiguriert ist, die Kombination des verschlüsselten ersten Datensatzes und des verschlüsselten zweiten Datensatzes zu berechnen.

**Revendications**

1. Appareil pour effectuer une recherche sur un ensemble de données crypté, où l'appareil est configuré pour :

recevoir un premier ensemble de données disposé dans une structure de données ayant une première dimension, où la structure de données représente une relation entre des documents et des mots clés, et la première dimension représente le nombre de mots clés ;
recevoir un deuxième ensemble de données ayant une deuxième dimension, où la deuxième dimension est égale à la première dimension et le deuxième ensemble de données représente une requête comprenant au moins un mot clé pour effectuer une recherche sur le premier ensemble de données afin d'identifier au moins un document qui comprend le mot clé ;
générer une clé de cryptage symétrique en fonction de la première dimension ;
crypter le premier ensemble de données en utilisant la clé de cryptage symétrique ;
crypter le deuxième ensemble de données en utilisant la clé de cryptage symétrique ;
transmettre le premier ensemble de données crypté et le deuxième ensemble de données crypté à un serveur pour stockage ;
recevoir du serveur un troisième ensemble de données crypté ;
décrypter le troisième ensemble de données crypté à l'aide de la clé de cryptage symétrique ; et
délivrer en sortie le troisième ensemble de données décrypté ;

où le troisième ensemble de données crypté est une combinaison du premier ensemble de données crypté et du deuxième ensemble de données crypté, où la combinaison est effectuée tandis que le premier ensemble de données et le deuxième ensemble de données sont dans l'état crypté, où le troisième ensemble de données représente l'au moins un document qui comprend l'au moins un mot clé ; et

où la clé de cryptage symétrique comprend un premier vecteur de position de cryptage pour le cryptage du premier ensemble de données et un deuxième vecteur de position de cryptage pour le cryptage du deuxième ensemble de données, où le premier vecteur de position de cryptage et le deuxième vecteur de position de cryptage définissent respectivement un ordre des éléments du premier ensemble de données crypté et du deuxième ensemble de données crypté, où une permutation vers un autre ordre des éléments du premier ensemble de données crypté et du deuxième ensemble de données crypté est détectable au moyen du premier vecteur de position de cryptage et du deuxième vecteur de position de cryptage respectifs ;

où le premier ensemble de données est crypté au moyen de la clé de cryptage symétrique sur la base de la relation :

$$c_i \equiv \alpha(a_i\sigma + p_i + A\varrho_i)mod\ t_i\mu$$

où :

$c_i$ désigne un élément du premier ensemble de données crypté ;
$\alpha$, $\sigma$ et $\mu$ sont des membres de la clé de cryptage symétrique ;
$p_i$ désigne un élément d'un vecteur de position de cryptage définissant un ordre des éléments du premier ensemble de données crypté, le vecteur de position de cryptage étant un membre de la clé de cryptage symétrique ;
$p_i$ désigne un élément de la structure de données du premier ensemble de données dans un état non crypté ; et
$A$, $a_i$ et $t_i$ sont des valeurs non déterministes ;

où le deuxième ensemble de données est crypté au moyen de la clé de cryptage symétrique sur la base de la relation :

$$q_i \equiv \gamma(b_i\sigma + d_i + V\kappa_i)mod\ s_i\mu$$

où :

$q_i$ désigne un élément du deuxième ensemble de données crypté ;
$\sigma$ et $\mu$ sont des membres de la clé de cryptage symétrique ;
$\kappa_i$ désigne un élément d'un vecteur de position de cryptage définissant un ordre des éléments du deuxième ensemble de données crypté, le vecteur de position de cryptage étant un membre de la clé de cryptage symétrique ;
$\gamma$ et $V$ sont des membres d'une clé d'interrogation utilisée dans le processus de décryptage du troisième ensemble de données crypté ;
$d_i$ désigne un élément du vecteur du deuxième ensemble de données dans un état non crypté ; et
$b_i$ et $s_i$ sont des valeurs non déterministes.

2. Appareil selon la revendication 1, dans lequel la structure de données du premier ensemble de données et du deuxième ensemble de données comprend un vecteur et la combinaison des premier et deuxième ensembles de données cryptés comprend un produit interne vectoriel.

3. Appareil selon l'une quelconque des revendications précédentes, dans lequel l'appareil est en outre configuré pour : générer un vecteur de paramètre basé sur un paramètre de sécurité et la dimension et, où la clé de cryptage symétrique est générée sur la base du vecteur de paramètre.

4. Appareil selon la revendication 3, dans lequel le premier ensemble de données et le deuxième ensemble de données sont cryptés au moyen du vecteur de paramètre et de la clé de cryptage symétrique.

5. Appareil selon la revendication 4, dans lequel le premier ensemble de données est crypté au moyen d'un premier paramètre du vecteur de paramètre, et le deuxième ensemble de données est crypté au moyen d'un deuxième paramètre du vecteur de paramètre.

6. Appareil selon la revendication 5, dans lequel le cryptage du deuxième ensemble de données comprend la création d'une clé d'interrogation associée au deuxième ensemble de données crypté, où le décryptage du troisième ensemble de données crypté est effectué au moyen de la clé de cryptage symétrique et de la clé d'interrogation.

7. Appareil selon l'une quelconque des revendications précédentes, dans lequel le cryptage d'au moins un des éléments du premier ensemble de données et des éléments du deuxième ensemble de données est basé sur le calcul d'une première valeur modulo une deuxième valeur masquée avec une troisième valeur non déterministe, où la troisième valeur non déterministe et la deuxième valeur sont maintenues dans un état secret.

8. Appareil selon l'une quelconque des revendications précédentes, dans lequel le cryptage comprend en outre l'ajout d'un vecteur d'initialisation aléatoire crypté (IV) selon la relation suivante :

$$c_{n+1} \equiv \alpha(a_{n+1}\sigma + A)mod\ t_{n+1}\mu$$

où :

$c_{n+1}$ désigne un élément du premier ensemble de données crypté ;
$\alpha$, $\sigma$ et $\mu$ sont des membres de la clé de cryptage symétrique ; et
$A$, $a_{n+1}$ et $t_{n+1}$ sont des valeurs non déterministes.

9. Appareil selon l'une quelconque des revendications précédentes, dans lequel le serveur est en outre configuré pour calculer un vecteur de résultat utilisé pour le décryptage du troisième ensemble de données, où le vecteur de résultat est calculé sur la base du produit interne du premier ensemble de données crypté par le deuxième ensemble de données crypté, représenté par la relation suivante :

$$z = (z_0, z_1)$$

$$z_0 = \sum_{i=0}^{n} c_i q_i \text{ et } z_1 = c_{n+1}$$

où :

$z$ désigne le vecteur de résultat ;
$c_i$ désigne un élément du premier ensemble de données crypté ;
$qi$ désigne un élément du deuxième ensemble de données crypté.

10. Appareil selon la revendication 9, dans lequel le décryptage du troisième ensemble de données crypté est basé sur la relation suivante :

$$m' \equiv \tau(z_0 - z_1 \sum_{i=0}^{n} \varrho_i q_i)mod\ \mu,$$

$$m \equiv m' - VK\ mod\ \sigma.$$

où :

$m$ désigne les valeurs décryptées du troisième ensemble de données ;
$K$ est un membre de la clé de cryptage symétrique ; et
$m'$ désigne une valeur intermédiaire calculée pendant le processus de décryptage.

11. Système pour effectuer une recherche sur un ensemble de données crypté, dans lequel le système comprend l'appareil selon l'une quelconque des revendications précédentes dans la communication de réseau avec un serveur, où le serveur est configuré pour calculer la combinaison du premier ensemble de données crypté et du deuxième ensemble de données crypté.

```
┌─────────────────────────────────┐
│   Receive first dataset having a first   │
│              dimension               │
│                 102                  │
└─────────────────────────────────┘
                  │
                  ▼
┌─────────────────────────────────┐
│ Receive second dataset having a second │
│  dimension equal to the first dimension  │
│                 104                  │
└─────────────────────────────────┘
                  │
                  ▼
┌─────────────────────────────────┐
│  Generate encryption key(s) according to │
│            the first dimension           │
│                 106                  │
└─────────────────────────────────┘
                  │
                  ▼
┌─────────────────────────────────┐
│   Encrypt first dataset using generated  │
│                 key(s)               │
│                 108                  │
└─────────────────────────────────┘
                  │
                  ▼
┌─────────────────────────────────┐
│  Encrypt second dataset using generated  │
│                 key(s)               │
│                 110                  │
└─────────────────────────────────┘
                  │
                  ▼
┌─────────────────────────────────┐
│  Transmit encrypted first and/or second to │
│             computing unit            │
│                 112                  │
└─────────────────────────────────┘
                  │
                  ▼
┌─────────────────────────────────┐
│    Create third encrypted dataset by    │
│ combining the first and second encrypted │
│                datasets               │
│                 114                  │
└─────────────────────────────────┘
                  │
                  ▼
┌─────────────────────────────────┐
│     Decrypt third encrypted dataset     │
│                 116                  │
└─────────────────────────────────┘
                  │
                  ▼
┌─────────────────────────────────┐
│          Provide third dataset          │
│                 118                  │
└─────────────────────────────────┘
```

FIG. 1

FIG. 2

Performance

302

KHE-Scheme

high

304

PHE-Schemes

306

low

SWHE-Schemes

308

FHE-Schemes

specific                    general        Functionality

300

FIG. 3

```
402 ─────┐
          │  Key and parameter generation
          │
404 ─────┐
          │  Encryption of plaintext by means of key and
          │  parameters
406 ─────┐
          │  Query generation by means of User Input,
          │  key and parameters
408 ─────┐
          │  Application of query to ciphertext
          │
410 ─────┐
          │  Decryption of result
```

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIADI YU et al.** Toward Secure Multikeyword Top-k Retrieval over Encrypted Cloud Data. *IEEE TRANSACTIONS ON DEPENDABLE AND SECURE COMPUTING,* vol. 10 (4
- **CHRISTOPH BOSCH et al.** *Selective Document Retrieval from Encrypted Database*
- **RAJPREET KAUR et al.** Secure and Efficient Search Over Cloud: A Comparative Study of various Searching Techniques. *INTERNATIONAL JOURNAL OF EMERGING TECHNOLOGIES IN ENGINEERING RESEARCH,* vol. 1 (1